# EUROPÄISCHE PATENTSCHRIFT

(11) **EP 1 472 130 B1**
(45) Veröffentlichungstag und Bekanntmachung des Hinweises auf die Patenterteilung: **06.09.2006**
(21) Anmeldenummer: 02735056.0
(22) Anmeldetag: 03.05.2002
(51) Int. Cl.: B62B 3/18

(54) **STAPELBARER EINKAUFSWAGEN**
STACKABLE SHOPPING TROLLEY
CHARIOT POUR MAGASINS EMBOITABLE

(30) Priorität: 06.02.2002 DE 10204801
(43) Veröffentlichungstag der Anmeldung: 03.11.2004
(73) Patentinhaber: WANZL METALLWARENFABRIK GMBH, D-89336 Leipheim (DE)
(72) Erfinder: BLAHA, Martin, 89335 Ichenhausen/Hochwang (DE); EBERLEIN, Herbert, 89347 Bubesheim (DE); HORN, Karl, 86381 Krumbach (DE)
(86) Internationale Anmeldenummer: PCT/DE2002/001603
(87) Internationale Veröffentlichungsnummer: WO 2003/066410

(56) Entgegenhaltungen:
- EP-A- 0 679 562
- EP-A- 0 684 176
- DE-A- 10 027 706
- DE-U- 8 500 639

## Beschreibung

Die Erfindung betrifft einen stapelbaren Einkaufswagen, mit einem Fahrgestell, das einen Korb zur Aufnahme von Ware trägt, wobei an den beiden Seitenwänden des Korbes und innerhalb der Fläche der Seitenwände je ein auf einer gemeinsamen horizontalen Achse gelegenes Lager angeordnet ist und die Lager zur schwenkbaren Lagerung einer außerhalb des Korbes befindlichen, nach rückwärts ausschwenkbaren, zur Aufnahme weiterer Ware bestimmten und mit Tragarmen ausgestatteten Abstelleinrichtung vorgesehen sind, wobei die Abstelleinrichtung nach Art einer Schaukel gestaltet ist.

Bei einem bekannten Einkaufswagen, der sich in seiner Bauweise größtenteils an einem Einkaufswagen orientiert, der in der DE 100 27 706 A1 beschrieben ist, sind die beiden Lager aus Flachstahl gebildet und auf geeignete Weise an den Seitenwänden des Korbes befestigt. Die Form der Lager ist so gewählt, dass einem ebenen, an einer Seitenwand anliegenden ersten Abschnitt ein weiterer, von der Seitenwand wegführender gekröpfter Abschnitt folgt, an den sich ein zweiter ebener Abschnitt anschließt, der ebenfalls zum Anliegen an der Seitenwand bestimmt ist. Die gekröpften Abschnitte der Lager lassen jeweils einen Raum entstehen, der sich zwischen der jeweiligen Seitenwand und dem dazugehörenden Lager befindet. Die beiden Räume werden zur teilweisen Aufnahme von Befestigungsmitteln genutzt, die zur schwenkbaren Befestigung der Abstelleinrichtung bestimmt ist. Die Tragarme der Abstelleinrichtung sind dabei mit ihren oberen Abschnitten an der Außenseite der Lager angeordnet. Diese oberen Abschnitte bilden in diesem Bereich zusammen mit den Befestigungsmitteln die äußere seitliche Begrenzung des Einkaufswagens. Letzteres hat sich inzwischen als nachteilig erwiesen, weil die Lager kantige Vorsprünge bilden, die seitlich von den Seitenwänden abstehen. Mit den Vorsprüngen kann man beim Umgang mit dem Einkaufswagen in einem Markt befindliche Ladenmöbel durch Anfahren beschädigen oder zerkratzen. Außerdem ist ein derartiger Einkaufswagen im Bereich seiner Lager sehr breit, was nicht erwünscht ist.

Es ist Aufgabe der Erfindung, einen Einkaufswagen der hier vorliegenden Art so weiterzuentwickeln, dass sich die eben genannten Nachteile vermeiden oder zumindest verringern lassen.

Die Lösung der Aufgabe besteht darin, dass an den Lagern oder durch die Lager je ein Raum zur Aufnahme des oberen Abschnittes eines Tragarmes gebildet ist, der von mehr als einer Seite begrenzt ist und dass der zwischen den Außenseiten der Lager und quer zur Schieberichtung des Einkaufswagens gemessene Abstand größer ist als der in gleicher Weise ermittelte Abstand zwischen den Außenseiten der oberen Abschnitte der Tragarme.

Durch das Unterbringen der oberen Abschnitte der Tragarme in je einem Raum, der von mehr als einer Seite begrenzt ist, können diese Abschnitte nicht mehr seitlich auftragen. Der Einkaufswagen wird dadurch im Bereich seiner beiden Lager schmäler, was sich bei der Handhabung und beim Fahren des Einkaufswagens als vorteilhaft erweist.

Das Verlegen der oberen Abschnitte in besagte Räume, welche von mehr als einer Seite begrenzt sind, erlaubt es, die Außenseite der Lager nun so zu gestalten, z.B. durch eine Schräge und/oder durch eine Wölbung, dass die Lager bei einem Anstoßen an Ladenmöbel eine Abweisfunktion ausüben. Dadurch wird in zweckmäßiger Weise ein Beschädigen der Ladenmöbel vermieden.

Die vorgeschlagene Lösung lässt weitere Ausgestaltungen zu. So kann am oder nahe des Raumes ein Rastmittel, z.B. eine Erhöhung, vorgesehen sein. Die Rastmittel wirken beim Verschwenken der Abstelleinrichtung in die Gebrauchslage so, dass sie die leere ausgeschwenkte Abstelleinrichtung in dieser Gebrauchslage halten, so dass sich die Abstelleinrichtung bequem beladen lässt.
Ferner kann an jedem Lager ein Anschlag so vorgesehen sein, dass sich die Abstelleinrichtung nur bis zu einem bestimmten Grad ausschwenken lässt. Dadurch wird ein Überdrehen der Abstelleinrichtung verhindert.

Durch das deutsche Gebrauchsmuster G 85 00 639.4 ist ein Einkaufswagen mit einer Abstellvorrichtung für Kisten oder dergleichen bekannt. Dessen mit Tragarmen ausgestattete Abstelleinrichtung ist entweder am Schiebegriff des Einkaufswagens oder an Befestigungsarmen gelagert, die von den oberen Korblängsrändern nach rückwärts reichen, so dass die Lagerstellen für die Tragarme etwas unterhalb des Niveaus des Schiebegriffes liegen. Die Lagerstellen befinden sich demnach nicht innerhalb der Fläche der Seitenwände. Ferner stützt sich die Abstellfläche der Abstelleinrichtung nach unten an einem Führungsbügel ab, so dass die Abstelleinrichtung nicht wie eine Schaukel gebaut ist. Auch sind keine Räume zur Aufnahme der oberen Abschnitte der Tragarme vorhanden.

Die Erfindung wird anhand von Ausführungsbeispielen näher erläutert. Es zeigt
- Fig. 1: einen mit einer Abstelleinrichtung ausgestatteten Einkaufswagen;
- Fig. 2: ein Lager in einfacher Bauweise;
- Fig. 3: ein aus Fig. 2 weiterentwickeltes Lager;
- Fig. 4: ein Lager, das an einer Tragplatte befestigt ist;
- Fig. 5: ein Lager nach Fig. 4, wie es auf die Tragplatte aufgesetzt wird;
- Fig. 6: ein Lager mit einer Einrichtung zum Halten einer unbeladenen Abstelleinrichtung in der Gebrauchslage;
- Fig. 7: ein Lager mit einem Anschlag zum Begrenzen des Schwenkbereiches einer Abstelleinrichtung sowie
- Fig. 8: eine Rückansicht eines Einkaufswagen gemäß der vorab genannten Ausführungsbeispiele;
- Fig. 9: eine weitere Ausgestaltung eines Lagers sowie
- Fig. 10: in Draufsicht zwei Einkaufswagen, die mit Lagern entsprechend Fig. 9 ausgestattet sind.

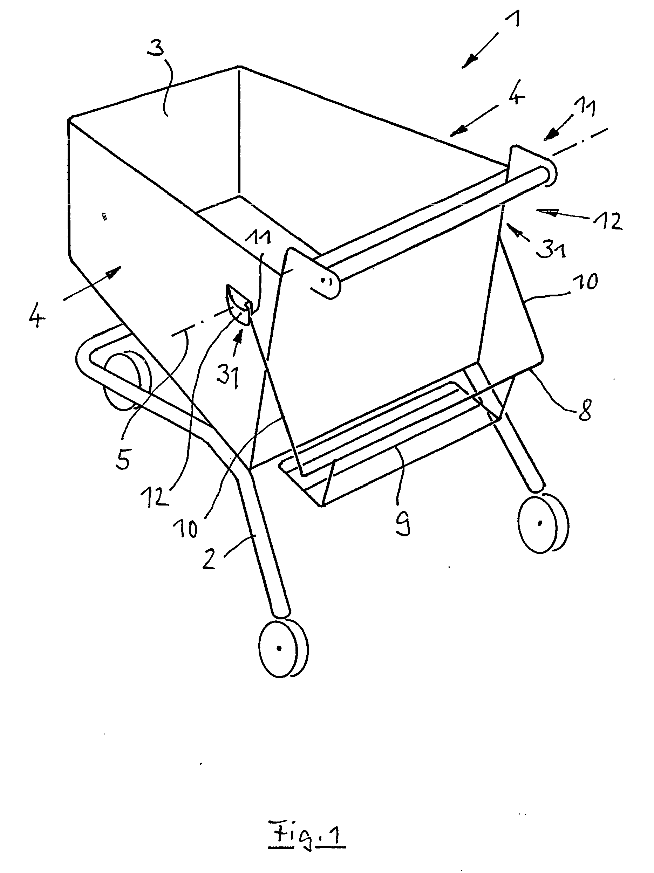

Fig. 1 zeigt einen stapelbaren Einkaufswagen 1, der in bekannter Weise so gestaltet ist, dass dieser sich in einen gleichen Einkaufswagen 1 platzsparend einschieben lässt. Das Fahrgestell 2 trägt einen Korb 3 zur Aufnahme von Ware. An der Rückseite des Einkaufswagens 1 ist eine mit einer Abstellfläche 9 ausgestattete Abstelleinrichtung 8 angeordnet, die sich zur Aufnahme weiterer Ware, insbesondere von schrumpfverpackten Getränkeflaschen eignet. Die Abstelleinrichtung 8 ist, entsprechend der EP 0 684 176 B1 nach Art einer Schaukel gestaltet, in an den Seitenwänden 4 des Korbes 3 befindlichen Lagern 12 um eine horizontale Achse 5 verschwenkbar gelagert und lässt sich nach rückwärts aus einer Nichtgebrauchslage in eine Gebrauchslage bewegen, aus der sie selbstständig wieder in die Nichtgebrauchslage zurückkehren kann. Die Abstelleinrichtung 8 wird mit den oberen Abschnitten 11 ihrer beiden Tragarme 10 in den Lagern 12 gehalten.

In einer Draufsicht zeigt Fig. 2 ein Lager 12 einfachster Bauweise. Das Lager 12 besteht aus einem Flachstahl, der hochkant angeordnet ist. Mit einem ersten Abschnitt 13 ist das Lager an vertikalen Drähten 7 einer Seitenwand 4 des Korbes 3 angeschweißt. Dem ersten Abschnitt 13 folgt ein schräger, als Prallfläche dienender Abschnitt 14, der von der Seitenwand 4 wegführt. An den schrägen Abschnitt 14 schließt ein zweiter Abschnitt 15 an, der parallel zum ersten Abschnitt 13 verläuft, jedoch in einem Abstand zur Seitenwand 4 angeordnet ist. Dieser Abstand lässt einen Raum 31 zur Aufnahme des oberen Abschnittes 11 eines der beiden Tragarme 10 der Abstelleinrichtung 8 entstehen. An der Innenseite 16 des zweiten Abschnittes 15 ist ein Achsbolzen 17 ortsfest angeordnet. Der horizontal verlaufende Achsbolzen 17 ist zur Seitenwand 4 gerichtet und trägt den beispielsweise als Öse ausgebildeten oberen Abschnitt 11 eines Tragarmes 10. Nicht näher beschriebene Sicherungsmittel, die von der Innenseite der gitterartigen Seitenwand 4 aus am Achsbolzen 17 anbringbar sind, sorgen dafür, dass sich der obere Abschnitt 11 eines Tragarmes 10 nicht vom Achsbolzen 17 lösen kann.

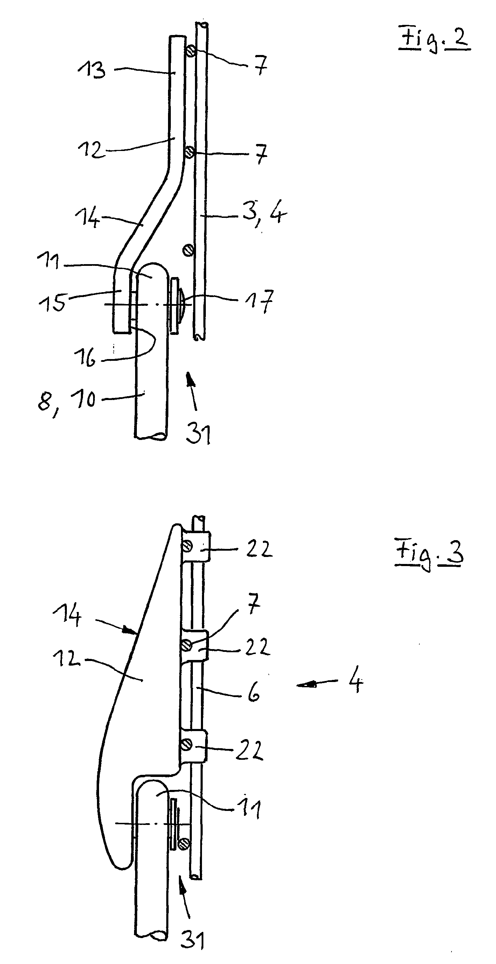

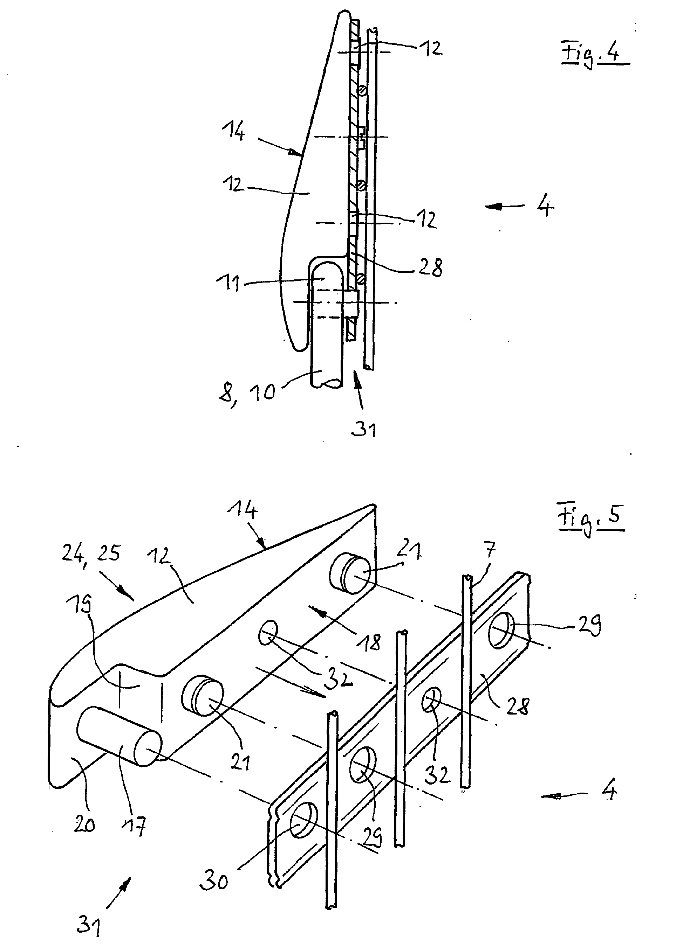

Die in den Figuren 3 und 4 ebenfalls in einer Draufsicht gezeigten Lager 12 sind aus Kunststoff gefertigt. Das entsprechend Fig. 3 gestaltete Lager 12 weist Haltemittel 22 auf, die es erlauben, das Lager 12 an horizontalen und vertikalen Drähten 6, 7 einer Seitenwand 4 zu befestigen. Das in Fig. 4 dargestellte Lager 12 weist ebenfalls Haltemittel 22 auf, die sich im Eingriff mit einer Tragplatte 28 befinden, die an einer Seitenwand 4 ortsfest angeordnet, z.B. angeschweißt sind. Beide Lager 12 weisen einen schrägen Abschnitt 14 auf, der als Prallfläche dann dient, wenn man mit dem Lager 12 an ein Hindernis, beispielsweise an ein Ladenmöbel anstößt.

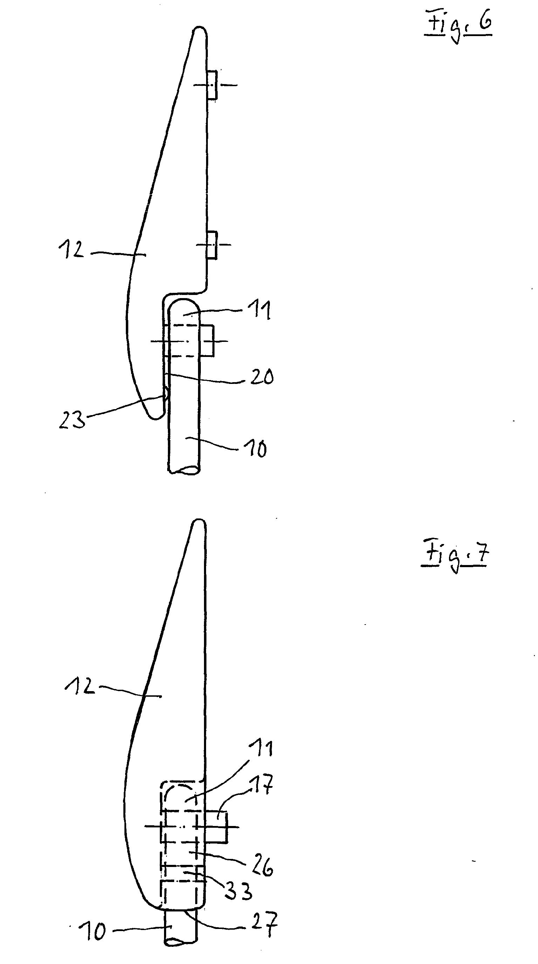

Fig. 5 zeigt in einer räumlichen Darstellung das in Fig. 4 beschriebene Lager 12 zusammen mit der Tragplatte 28, die mit Hilfe von Sicken an vertikalen Drähten 7 einer Seitenwand 4 angeschweißt ist. Die Tragplatte 28 weist zwei horizontal sich erstreckende Haltebohrungen 29 und eine Stützbohrung 30 auf. Das Lager 12 ist keilförmig gestaltet und weist eine senkrechte Anlagefläche 18 auf, die zum Anliegen an die Tragplatte 28 bestimmt ist. An die Anlagefläche 18 schließt rechtwinklig eine Distanzfläche 19 an, der eine ebenfalls senkrecht verlaufende Stützfläche 20 folgt, die in einem parallelen Abstand zur Anlagefläche 18 angeordnet ist. An der Stützfläche 20 ist ein horizontal angeordneter, zur Tragplatte 28 gerichteter Achsbolzen 17 anformt. Der Stützfläche 20 folgt ein Rücken 24, der von oben betrachtet aus einer Erhöhung 25 und aus dem schrägen Abschnitt 14 besteht und wieder in die Anlagefläche 18 mündet. An der Anlagefläche 18 sind als Haltemittel 22 zwei horizontal angeordnete Zapfen 21 angeformt, die an ihrer Spitze mit einer Hinterschneidung oder punktförmigen Erhöhungen ausgestattet sind. Die Zapfen 21 weisen den gleichen Achsabstand auf wie die Haltebohrungen 29 der Tragplatte 28. Wie aus der Zeichnung ersichtlich, kann das Lager 12 als rechtes Lager für die rechte Seitenwand 4 des Korbes 3 und als linkes Lager für die linke Seitenwand 4 des Korbes 3 verwendet werden. Der in der Zeichnung dargestellte Pfeil zeigt die Richtung an, wie das Lager 12 auf die Tragplatte 28 aufgesetzt wird. Bei der Montage der Abstelleinrichtung 8 werden zuerst die Tragarme 10 der Abstelleinrichtung 8 mit ihren ösenartig ausgebildeten oberen Abschnitten 11 auf die Achsbolzen 17 des linken und des rechten Lagers 12 aufgesetzt. Anschließend werden die Lager 12 mit ihren Zapfen 21 voraus gegen die Tragplatten 28 gedrückt, wobei die Zapfen 21 in die Haltebohrungen 29 eintauchen und mit diesen verrasten, so dass jedes Lager 12 an der entsprechenden Tragplatte 28 arretiert ist. Die Länge der Achsbolzen 17 ist so gewählt, dass beim Aufsetzen der Lager 12 auf die Tragplatten 28 die Achsbolzen 17 in die Stützbohrungen 30 eintauchen und in diesen abgestützt sind. Dadurch wird eine sichere Lagerung und Abstützung der Tragarme 10 ermöglicht. In auf die Tragplatten 28 aufgesetztem Zustand der Lager 12 ist zwischen jeder Seitenwand 4 oder jeder Tragplatte 28 und dem jeweiligen Lager 12 ein Raum 31 geschaffen, der zur Aufnahme des oberen Abschnittes 11 eines der beiden Tragarme 10 der Abstelleinrichtung 8 bestimmt ist. Jeder Raum 31 wird durch die Tragplatte 28, durch die Distanzfläche 19 und durch die Stützfläche 20 begrenzt. Der Raum 31 ist nach oben, nach unten und nach hinten offen, so dass sich die an den Achsbolzen 18 befmdlichen Tragarme 10 verschwenken lassen. In jeder Tragplatte 28 und in jedem Lager 12 kann eine Bohrung 32 zur Aufnahme einer Schraube vorgesehen sein, so dass es möglich ist, jedes Lager 12 noch zusätzlich mit der jeweiligen Tragplatte 28 zu verschrauben.

Gemäß dem Ausführungsbeispiel nach Fig. 6 ist es möglich, an der Stützfläche 20 eines jeden Lagers 12 einen Vorsprung anzuordnen, der beim Verschwenken der Abstelleinrichtung 8 von den Tragarmen 10 überwunden werden muss. Die Lage des Vorsprungs 23 ist so gewählt, dass beim Verschwenken der Abstelleinrichtung 8 in die Gebrauchslage die Vorsprünge 23 der beiden Lager 12 die Abstelleinrichtung 8 daran hindern, von selbst in die Nichtgebrauchslage zurückzuschwenken. Die Abstelleinrichtung 8 verharrt vielmehr unter Anlage an den Vorsprüngen 23 in der ausgeschwenkten Lage, so dass beispielsweise eine größere Warenpackung mit beiden Händen auf der Abstelleinrichtung 8 abstellbar ist, ohne dass man die Abstelleinrichtung 8 mit einer Hand in dieser Lage halten muss. Durch etwas Druck auf die Abstelleinrichtung 8 kann die Arretierung überwunden werden, in dem man die Tragarme 10 an den Vorsprüngen 23 vorbeidrückt. Die Tragarme 10 berühren dabei die Vorsprünge 23 mit einem gewissen Druck. Es ist möglich, an jeder Tragplatte 28 einen Vorsprung 23 anzuordnen.

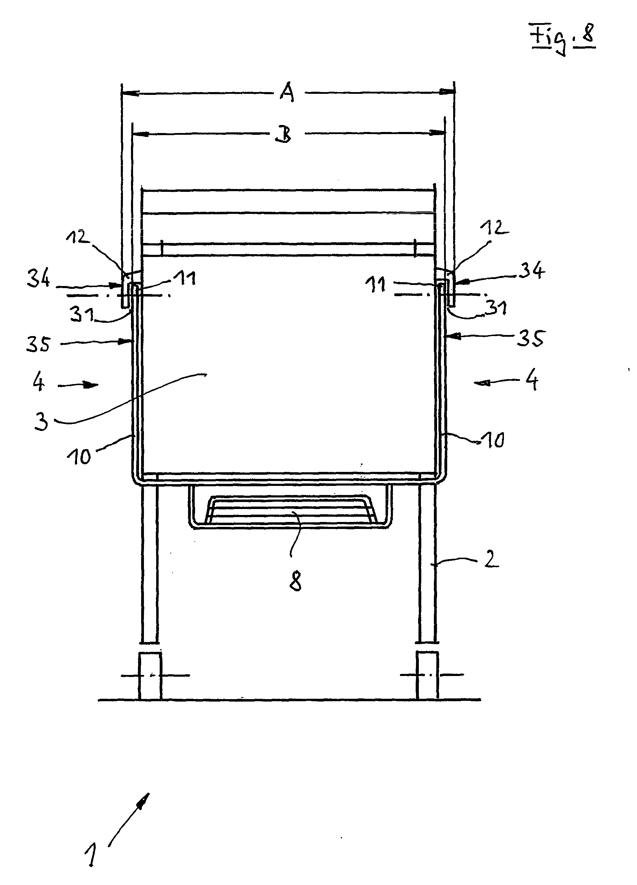

Bei dem in Fig. 7 dargestellten Lager 12 ist der Achszapfen 17 von oben her mit einem Dach 26 abgedeckt. Verschwenkt man die Abstelleinrichtung 8 nach hinten, schlagen die Tragarme 10 der Abstelleinrichtung 8 an die hintere Kante 27 des Daches 26 an, so dass die Abstelleinrichtung 8 in ihrer Schwenkbeweglichkeit begrenzt wird. Aus Sicherheistsgründen kann jedoch auch an der Unterseite des Daches 26 und in einem Abstand zur hinteren Kante 27 ein Anschlag 33 angeformt sein, mit dem sich die gleiche Wirkung erzielen lässt, wie vorher beschrieben. Ebenso ist es denkbar, an jeder Tragplatte 28 einen Anschlag 33 vorzusehen.
Es ist möglich, alternativ je einen Achsbolzen 17 an den beiden Tragplatten 28 anzuschweißen oder anzunieten. In diesem Falle entfällt die Stützbohrung 30 an den Tragplatten 28. An deren Stelle tritt jeweils ein nach außen gerichteter Achsbolzen 17. Pro Lager 12 kann dann an der Stützfläche 20 eine horizontal angeordnete Stützbohrung 30 vorgesehen sein, in welche das freie Ende des jeweiligen Achsbolzens 17 dann eintaucht und sich dort abstützt, wenn die Lager 12 auf eine Tragplatte 28 aufgesetzt und gesichert werden. Auch bei dieser Ausführungsform befinden sich die Achsbolzen 17 auf der horizontalen Achse 5. Auch hier durchmessen die Achsbolzen 17 je einen Raum 31 in horizontaler Richtung und die oberen Abschnitte 11 der Tragarme 10 sind in je einem Raum 31 angeordnet.

Die in Fig. 8 gezeigten technischen Merkmale treffen auf alle hier beschriebenen Ausführungsbeispiele zu. Die Zeichnung zeigt einen Einkaufswagen 1 in einer Rückansicht. Man sieht die Rückseite des Einkaufswagens 1 in dessen Schieberichtung betrachtet. Das vereinfacht dargestellte Fahrgestell 2 trägt den Korb 3. An den beiden Seitenwänden 4 des Korbes 3 sind die beiden Lager 12 angeordnet, welche die Abstelleinrichtung 8 tragen. Der Deutlichkeit wegen sind die beiden Lager 12 sowie die Tragarme 10 der Abstelleinrichtung 8 übertrieben groß gezeichnet. Man erkennt anhand der Zeichnung, dass der zwischen den Außenseiten 34 der Lager 12 und quer zur Schieberichtung des Einkaufswagens 1 gemessene Abstand A größer ist als der in gleicher Weise ermittelte Abstand B zwischen den Außenseiten 35 der oberen Abschnitte 11 der Tragarme 10. Ersichtlich ist auch, dass an den Lagern 12 oder durch die Lager 12 je ein Raum 31 zur Aufnahme des oberen Abschnittes 11 eines Tragarmes 10 gebildet ist. An der Bildung der Räume 31 können sich die Seitenwände 4 und/oder die in Fig. 4 und 5 beschriebenen Tragplatten 28 beteiligen. Andererseits kann jedes Lager 12 beliebig so gestaltet sein, dass es ohne Mitwirkung einer Seitenwand 4 oder einer Tragplatte 28 in der Lage ist, einen Raum 31 zu bilden. Ein entsprechender Einschnitt, eine Abstufung oder eine gabelartige Form lassen dies zu.

Das in Fig. 9 in einer Draufsicht dargestellte Lager 12 ist für die Verwendung bei Einkaufswagen 1 vorgesehen, die eine relativ kleine "Stapeltiefe" aufweisen. Unter diesem Begriff versteht der Fachmann jene in Schieberichtung eines Einkaufswagens 1 gemessene Strecke, die sich aus dem Abstand zweier identischer Messpunkte ergibt, wenn zwei Einkaufswagen 1 engstmöglich ineinandergeschoben, also gestapelt sind. Der Abstand der Handgriffe zweier Einkaufswagen 1 ergibt zum Beispiel jene Strecke. Das dargestellte Lager 12 entspricht in etwa jener Bauweise, wie diese in den Figuren 2 bis 7 vorgeschlagen worden ist, jedoch mit dem Unterschied, dass die Außenseite 34 des Lagers 12 in einen vorderen Abschnitt 36 und in einen hinteren Abschnitt 37 aufgeteilt ist. Der vordere Abschnitt 36 ist näher an der Seitenwand 4 eines Korbes 3 angeordnet als der hintere Abschnitt 37.

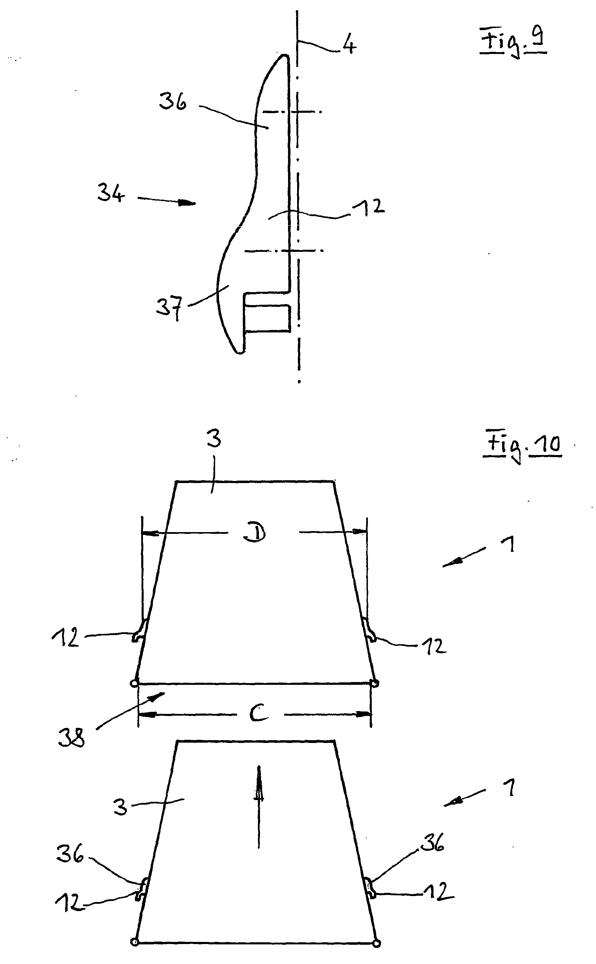

Fig. 10 verdeutlicht den Sinn der in Fig. 9 beschriebenen Maßnahme. Die Zeichnung zeigt in einer Draufsicht und stark vereinfacht zwei mit Lagern 12 ausgestattete bekannte Körbe 3 mit trapezförmigem Grundriss. Die Körbe 3 sollen letztendlich zwei Einkaufswagen 1 darstellen, die in bekannter Weise platzsparend so ineinandergeschoben werden sollen, dass der Korb 3 des hinteren Einkaufswagens 1 größtenteils im Korb 3 des vorausbefindlichen Einkaufswagen 1 Platz findet. Die quer zur Schieberichtung der Einkaufswagen 1 gemessene lichte Weite der hinteren, gewöhnlich durch eine Klappe verschließbaren Korböffnung 38, Maß C, ist größer, als der gleichermaßen gemessene Abstand D zwischen den vorderen Abschnitten 36 zweier am Korb 3 befindlicher Lager 12. Beim platzsparenden Ineinanderschieben zweier Einkaufswagen 1 tauchen demnach die vorderen Abschnitte 36 der Lager 12 eines hinteren einzuschiebenden Einkaufswagens 1 in das Korbinnere des vorausbefmdlichen Einkaufswagens 1 ein. Auf diese Weise lässt sich die in Fig. 9 beschriebene Stapeltiefe zweier Einkaufswagen 1 auch weiterhin gering halten.

## Patentansprüche

1. Stapelbarer Einkaufswagen (1), mit einem Fahrgestell (2), das einen Korb (3) zur Aufnahme von Ware trägt, wobei an den beiden Seitenwänden (4) des Korbes (3) und innerhalb der Fläche der Seitenwände (4) je ein auf einer gemeinsamen horizontalen Achse (5) gelegenes Lager (12) angeordnet ist und die Lager (12) zur schwenkbaren Lagerung einer außerhalb des Korbes (3) befindlichen, nach rückwärts ausschwenkbaren, zur Aufnahme weiterer Ware bestimmten und mit Tragarmen (10) ausgestatteten Abstelleinrichtung (8) vorgesehen sind, wobei die Abstelleinrichtung (8) nach Art einer Schaukel gestaltet ist, **dadurch gekennzeichnet, dass** an den Lagern (12) oder durch die Lager (12) je ein Raum (31) zur Aufnahme des oberen Abschnittes (11) eines Tragarmes (10) gebildet ist, der von mehr als einer Seite begrenzt ist, und dass der zwischen den Außenseiten (34) der Lager (12) und quer zur Schieberichtung des Einkaufswagens (1) gemessene Abstand größer ist als der in gleicher Weise ermittelte Abstand zwischen den Außenseiten (35) der oberen Abschnitte (11) der Tragarme (10).

2. Einkaufswagen nach Anspruch 1, **dadurch gekennzeichnet, dass** an jeder Seitenwand (4) eine Tragplatte (28) angeordnet und jede Tragplatte (28) zum Befestigen eines Lagers (12) bestimmt ist und dass der Raum (31) durch eine Tragplatte (28) und einem Lager (12) selbst gebildet ist.

3. Einkaufswagen nach Anspruch 1 oder 2, **dadurch gekennzeichnet, dass** der von mehr als einer Seite begrenzte Raum (31) nach oben, nach unten und nach hinten offen ist.

4. Einkaufswagen nach Anspruch 2 oder 3, wenn abhängig von Anspruch 2, **dadurch gekennzeichnet, dass** jedes Lager (12) oder jede Tragplatte (28) einen horizontal angeordneten Achsbolzen (17) aufweist und jeder Achsbolzen (17) zur schwenkbaren Aufnahme des oberen Abschnittes (11) eines Tragarmes (10) vorgesehen ist.

5. Einkaufswagen nach Anspruch 2 bis 4, wenn abhängig von Anspruch 2, **dadurch gekennzeichnet, dass** der an jedem Lager (12) angeordnete Achsbolzen (17) zum Abstützen an einer Tragplatte (28) bestimmt ist.

6. Einkaufswagen nach Anspruch 2 bis 5, wenn abhängig von Anspruch 2, **dadurch gekennzeichnet, dass** der an jeder Tragplatte (28) befindliche Achsbolzen (17) in eine am Lager (12) befindliche Stützbohrung (30) einfügbar ist.

7. Einkaufswagen nach einem der Ansprüche 1 bis 6, **dadurch gekennzeichnet, dass** jedes Lager (12) einen als Prallfläche vorgesehenen schrägen Abschnitt (14) aufweist.

8. Einkaufswagen nach einem der Ansprüche 1 bis 7, **dadurch gekennzeichnet, dass** jedes Lager (12) so gestaltet ist, dass es sowohl an der rechten als auch an der linken Seitenwand (4) eines Korbes (3) befestigbar ist.

9. Einkaufswagen nach einem der Ansprüche 2 bis 8, **dadurch gekennzeichnet, dass** jedes Lager (12) zusätzlich mit einer Tragplatte (28) verschraubbar ist.

10. Einkaufswagen nach einem der Ansprüche 1 bis 9, **dadurch gekennzeichnet, dass** die Außenseite (34) eines jeden Lagers (12) in einen vorderen Abschnitt (36) und in einen hinteren Abschnitt (37) aufgeteilt ist und dass die quer zur Schieberichtung des Einkaufswagens 1 gemessene lichte Weite der hinteren Korböffnung (38) größer ist als der gleichermaßen gemessene Abstand zwischen den vorderen Abschnitten (36) der Lager (12).

## Claims

1. A nestable shopping trolley (1) comprising a wheel frame (2) carrying a basket (3) for holding goods, wherein a bearing (12) is arranged on each of the two side walls (4) of the basket (3) within the area of the side walls (4) and on a common horizontal axis (5), and the bearings (12) are provided for pivotably mounting a shelf arrangement (8) which is located outside the basket (3), pivotable rearwards, intended for holding further goods and provided with supporting arms (10), the shelf arrangement (8) being constructed in the manner of a swing, **characterised in that** a respective space (31) for accommodating the upper portion (11) of a supporting arm (10) is formed on the bearings (12) or by the bearings (12) and is bounded on more than one side, and **in that** the distance measured between the outer surfaces (34) of the bearings (12) transversely to the pushing direction of the shopping trolley (1) is greater than the similarly determined distance between the outer surfaces (35) of the upper portions (11) of the supporting arms (10).

2. A shopping trolley according to claim 1, **characterised in that** a supporting plate (28) is arranged on each side wall (4), and each supporting plate (28) is intended to secure a bearing (12), and **in that** the space (31) is formed by a supporting plate (28) and a bearing (12) itself.

3. A shopping trolley according to claim 1 or 2, **characterised in that** the space (31), which is bounded on more than one side, is open upwardly, downwardly and rearwardly.

4. A shopping trolley according to claim 2 or 3, if dependent on claim 2, **characterised in that** each bearing (12) or each supporting plate (28) has a horizontally arranged pivot pin (17), and each pivot pin (17) is provided for pivotably mounting the upper portion (11) of a supporting arm (10).

5. A shopping trolley according to claims 2 to 4, if dependent on claim 2, **characterised in that** the pivot pin (17) arranged on each bearing (12) is intended to be supported on a supporting plate (28).

6. A shopping trolley according to claims 2 to 5, if dependent on claim 2, **characterised in that** the pivot pin (17) provided on each supporting plate (28) is insertable into a supporting bore (30) provided in the bearing (12).

7. A shopping trolley according to any one of claims 1 to 6, **characterised in that** each bearing (12) has an oblique portion (14) provided as a deflection surface.

8. A shopping trolley according to any one of claims 1 to 7, **characterised in that** each bearing (12) is constructed so as to be fixable to both the right-hand and the left-hand side wall (4) of a basket (3).

9. A shopping trolley according to any one of claims 2 to 8, **characterised in that** each bearing (12) can additionally be screwed to a supporting plate (28).

10. A shopping trolley according to any one of claims 1 to 9, **characterised in that** the outer surface (34) of each bearing (12) is divided into a front portion (36) and a rear portion (37) and **in that** the clear width of the rear basket opening (38) measured transversely to the pushing direction of the shopping trolley (1) is greater than the similarly measured distance between the front portions (36) of the bearings (12).

## Revendications

1. Chariot pour magasins emboîtable (1) avec un châssis (2) qui porte un panier (3) servant à recevoir des marchandises, un logement (12) placé sur un axe horizontal commun (5) étant respectivement disposé sur les deux parois latérales (4) du panier (3) et à l'intérieur de la surface des parois latérales (4) et les logements (12) étant prévus pour une mise en place pivotante d'un dispositif de chargement (8) qui se trouve à l'extérieur du panier (3), qui peut être pivoté vers l'arrière, qui est destiné à recevoir d'autres marchandises et qui est muni de bras porteurs (10), le dispositif de chargement (8) étant conçu à la manière d'une balançoire, **caractérisé en ce que** sur les logements (12) ou par les logements (12) est formé respectivement un espace (31) qui sert à recevoir la section supérieure (11) d'un bras porteur (10) qui est délimité par plus d'un côté et **en ce que** l'espacement mesuré entre les côtés extérieurs (34) des logements (12) et transversalement par rapport à la direction de déplacement du chariot pour magasins (1) est plus grand que l'espacement entre les côtés extérieurs (35) des sections supérieures (11) des bras porteurs (10) qui a été déterminé de la même manière.

2. Chariot pour magasins selon la revendication 1, **caractérisé en ce que** sur chaque paroi latérale (4) est disposée une plaque de support (28) et que chaque plaque de support (28) est destinée à la fixation d'un logement (12) et **en ce que** l'espace (31) lui-même est formé par une plaque de support (28) et par un logement (12).

3. Chariot pour magasins selon la revendication 1 ou 2, **caractérisé en ce que** l'espace (31) délimité par plus d'un côté est ouvert vers le haut, vers le bas et vers l'arrière.

4. Chariot pour magasins selon la revendication 2 ou 3, s'il est dépendant de la revendication 2, **caractérisé en ce que** chaque logement (12) ou chaque plaque de support (28) comprend un tourillon (17) disposé horizontalement et que chaque tourillon (17) est prévu pour recevoir de manière pivotante la section supérieure (11) d'un bras porteur (10).

5. Chariot pour magasins selon la revendication 2 à 4, s'il est dépendant de la revendication 2, **caractérisé en ce que** le tourillon (17) disposé sur chaque logement (12) est destiné à assurer un appui sur une plaque de support (28).

6. Chariot pour magasins selon la revendication 2 à 5, s'il est dépendant de la revendication 2, **caractérisé en ce que** le tourillon (17) disposé sur chaque plaque de support (28) peut être introduit dans une forure d'appui (30) se trouvant dans le logement (12).

7. Chariot pour magasins selon l'une quelconque des revendications 1 à 6, **caractérisé en ce que** chaque logement (12) comprend une section en biais (14) prévue comme surface d'impact.

8. Chariot pour magasins selon l'une quelconque des revendications 1 à 7, **caractérisé en ce que** chaque logement (12) est conçu de telle façon qu'il puisse être fixé aussi bien sur la paroi latérale droite (4) que sur la paroi latérale gauche (4) d'un panier (3).

9. Chariot pour magasins selon l'une quelconque des revendications 2 à 8, **caractérisé en ce que** chaque logement (12) peut en outre être vissé sur une plaque de support (28).

10. Chariot pour magasins selon l'une quelconque des revendications 1 à 9, **caractérisé en ce que** le côté extérieur (34) de chaque logement (12) est subdivisé en une section avant (36) et en une section arrière (37)
et **en ce que** la largeur libre de l'ouverture arrière (38) du panier mesurée transversalement à la direction de déplacement du chariot pour magasins 1 est plus grande que l'espacement entre les sections avant (36) des logements (12), lequel est mesuré de la même manière.
